# EUROPEAN PATENT APPLICATION

(11) **EP 4 095 685 A1**
(43) Date of publication of application: **30.11.2022**
(21) Application number: 22173819.8
(22) Date of filing: 17.05.2022
(51) Int. Cl.: G06F 9/448

(54) **STATE MACHINE PROCESSING METHOD AND APPARATUS, STATE PROCESSING METHOD AND APPARATUS, ELECTRONIC DEVICE, AND STORAGE MEDIUM**

(30) Priority: 28.05.2021 CN 202110594974
(71) Applicant: Apollo Intelligent Connectivity (Beijing) Technology Co., Ltd., Beijing 100176 (CN)
(72) Inventor: LIU, Rong, BEIJING, 100176 (CN)
(74) Representative: Deambrogi, Edgardo

(57) **Abstract**

Provided are a state machine processing method and apparatus, a state processing method and apparatus, an electronic device, and a storage medium, which relates to the field of artificial intelligences such as computer technologies and Internet of vehicles. The method includes the following. A global state and an individual state are determined from all states of a state processing object; individual states are classified to obtain at least one local-state set; a sub-state machine is constructed for each of the at least one local-state set, where each sub-state machine manages an individual state in one of the at least one local-state set; and a layered finite state machine is constructed according to the sub-state machine and the global state. According to the embodiments of the present disclosure, the complexity of the state machine and the states may be reduced, the development and maintenance cost of the state machine is reduced, and the flexibility of the state machine in managing and controlling the state is improved.

## Description

### TECHNICAL FIELD

The present disclosure relates to the field of artificial intelligences such as computer technologies, Internet of vehicles.

### BACKGROUND

A state machine is very widely applied in the field of computers, and many systems use the state machine. The state machine is composed of a set of nodes (states) and a set of respective transition functions and defines multiple states and transitions between the states. Among the defined multiple states, there is at least one initial state and at least one final state; the state machine starts to run from the initial state, and stops running when the state machine is transitioned to the final state. When a trigger event is received, the state machine parses a current state thereof by using a respective state parsing module, and controls the jump between respective state nodes by using a respective control module according to the received trigger event and the current state, so that the state machine jumps to a next state. Therefore, how to define a reasonably designed state machine for different states is very important for the management performance of the states.

### SUMMARY

Embodiments of the present disclosure provides a state machine processing method and apparatus, a state processing method and apparatus, an electronic device and a storage medium, so as to reduce the complexity of a state machine and states, reduce the development and maintenance cost of the state machine, and improve the flexibility of the state machine in managing and controlling the state.

In a first aspect, an embodiment of the present disclosure provides a state machine processing method. The state machine processing method includes the following. A global state and an individual state are determined from all states of a state processing object; individual states are classified to obtain at least one local-state set; a sub-state machine is constructed for each of the at least one local-state set, where each sub-state machine manages an individual state in one of the at least one local-state set; and a layered finite state machine is constructed according to the sub-state machine and the global state.

In a second aspect, an embodiment of the present disclosure provides a state processing method. The state processing method includes the following. A state trigger event of a state processing object is determined; the state trigger event is responded to according to the state trigger event and a layered finite state machine of the state processing object, where the layered finite state machine is constructed by the state machine processing method described in the first aspect; and a current updated state is determined according to a response result of the state trigger event.

In a third aspect, an embodiment of the present disclosure provides a state machine processing apparatus. The state machine processing apparatus includes a state determination module, an individual state classification module, a sub-state-machine construction module and a layered-finite-state-machine construction module. The state determination module is configured to determine a global state and an individual state from all states of a state processing object. The individual state classification module is configured to classify individual states to obtain at least one local-state set. The sub-state-machine construction module is configured to construct a sub-state machine for each of the at least one local-state set; where each sub-state machine manages an individual state in one of the at least one local-state set. The layered-finite-state-machine construction module is configured to construct a layered finite state machine according to the sub-state machine and the global state.

In a fourth aspect, an embodiment of the present disclosure provides a state processing apparatus. The state processing apparatus includes a state-trigger-event determination module, a state-trigger-event response module and a current-updated-state determination module. The state-trigger-event determination module is configured to determine a state trigger event of a state processing object. The state-trigger-event response module is configured to respond to the state trigger event according to the state trigger event and a layered finite state machine of the state processing object; where the layered finite state machine is constructed by the state machine processing method according to any embodiment. The current-updated-state determination module is configured to determine a current updated state according to a response result of the state trigger event.

In a fifth aspect, an embodiment of the present disclosure provides an electronic device. The electronic device includes at least one processor and a memory communicatively connected to the at least one processor. The memory stores an instruction executable by the at least one processor, and when the instruction is executed by the at least one processor, the at least one processor is caused to perform the state machine processing method provided in the embodiment of the first aspect or the state processing method provided in the embodiment of the second aspect.

In a sixth aspect, an embodiment of the present disclosure provides a non-transitory computer-readable storage medium storing a computer instruction. The computer instruction is configured to cause a computer to perform the state machine processing method provided in the embodiment of the first aspect or the state processing method provided in the embodiment of the second aspect.

In a seventh aspect, an embodiment of the present disclosure provides a computer program product. The computer program product includes a computer program, the computer program, when executed by a processor, implements the state machine processing method provided in the embodiment of the first aspect or the state processing method provided in the embodiment of the second aspect.

According to the embodiments of the present disclosure, the global state and the individual state are determined from the all states of the state processing object; the individual states are classified to obtain the at least one local-state set; the sub-state machine that may manage an individual state in the local-state set are constructed for each of the at least one local-state set; and thus the layered finite state machine is constructed according to the sub-state machine and the global state. After the layered finite state machine is constructed, when the state trigger event of the state processing object is determined, the state trigger event may be responded according to the state trigger event and the layered finite state machine of the state processing object, and the current updated state is determined according to the response result of the state trigger event. The problems of high complexity of the state machine and the states, high development and maintenance cost of the state machine, the poor flexibility in managing and controlling the state and the like in an existing state management method are solved, so that the complexity of the state machine and the states is reduced, the development and maintenance cost of the state machine is reduced, and the flexibility of the state machine in managing and controlling the state is improved.

It should be understood that the contents described in this section are not intended to identify key or critical features of the embodiments of the present disclosure, nor intended to limit the scope of the present disclosure. Other features of the present disclosure will be readily understood from the following description.

### BRIEF DESCRIPTION OF DRAWINGS

The drawings are intended to provide a better understanding of this scheme and are not to be construed as limiting the present disclosure.
FIG. 1 is a schematic diagram of an effect of a finite state machine of a Bluetooth telephone in the related art managing part of states;
FIG. 2 is a flowchart of a state machine processing method provided in an embodiment of the present disclosure;
FIG. 3 is a flowchart of a state machine processing method provided in an embodiment of the present disclosure;
FIG. 4 is a schematic structural diagram of a layered finite state machine of a Bluetooth telephone device provided in an embodiment of the present disclosure;
FIG. 5 is a flowchart of a state processing method provided in an embodiment of the present disclosure;
FIG. 6 is a flowchart of a state machine processing method provided in an embodiment of the present disclosure;
FIG. 7 is a structural diagram of a state machine processing apparatus provided in an embodiment of the present disclosure;
FIG. 8 is a structural diagram of a state machine processing apparatus provided in an embodiment of the present disclosure; and
FIG. 9 is a schematic structural diagram of an electronic device for implementing a state machine processing method or a state processing method provided in an embodiment of the present disclosure.

### DETAILED DESCRIPTION

Exemplary embodiments of the present disclosure are described below with reference to the accompanying drawings, in which various details of embodiments of the present disclosure are included to assist understanding, and which are to be considered as merely exemplary. Therefore, those of ordinary skill in the art will recognize that various changes and modifications of the embodiments described herein may be made without departing from the scope and spirit of the present disclosure. Also, descriptions of well-known functions and structures are omitted in the following description for clarity and conciseness.

In the related art, different state machine control methods need to be designed for different state definitions, and all state control basically uses a whole large and complete state machine for management, resulting in extremely complex state changes finally presented by the state machine. A processing manner of the state machine has an obvious defect that when a global-influence event (an event capable of influencing all states) is triggered, a reset operation for switching from a current state to a state corresponding to the global-influence event needs to be executed. Therefore, the all states are managed through the unified state machine, the complexity of the states and the state machine is higher, the management and maintenance cost of the state machine is greatly increased, and the possibility that the logic of the state machine has vulnerabilities is increased. Moreover, once the definition of the state machine is changed (such as, increasing or decreasing a state), a large amount of modification of control program codes of the state machine is caused, and the development difficulty and the development cost of an application system based on the state machine are increased to a great extent.

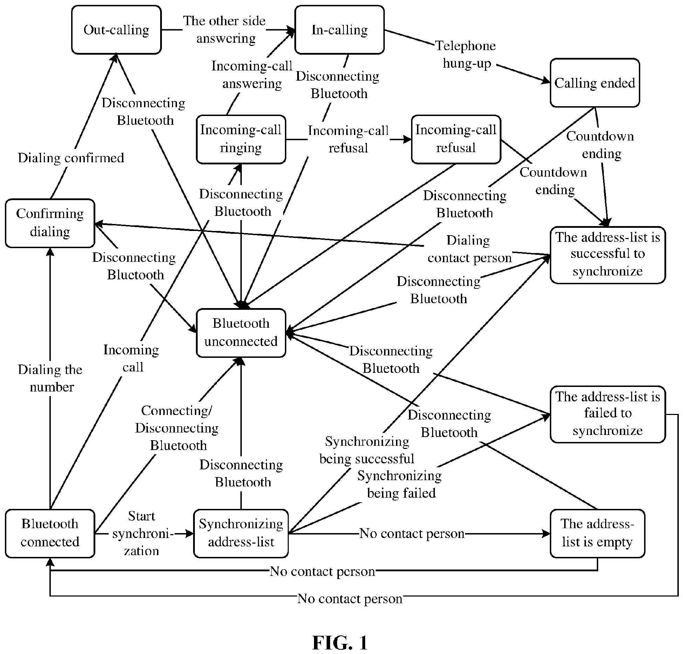

FIG. 1 is a schematic diagram of an effect of a finite state machine of a Bluetooth telephone in the related art for managing a part of states. As shown in FIG. 1, a Bluetooth phone management system is used as an example, a rectangular box in FIG. 1 represents a state, and a connection line represents a response relationship between the states and a specific state trigger event. A Bluetooth telephone management system in the related art manages all states by using a whole large and complete state machine, and the state changes finally presented by the state machine are extremely complex, for example, when a current state of the Bluetooth telephone is a state of synchronizing a contact person, a state of dialing a contact person cannot be processed at the same time. For the Bluetooth phone, a Bluetooth connection and disconnection event is a global-influence event. All states of the Bluetooth telephone need to be switched to a Bluetooth unconnected state and be subjected to a reset operation for turning into a previous state when the Bluetooth disconnection event is received. As shown in FIG. 1, the complexity of the existing state machine is relatively high, and significantly, each state may receive a "Bluetooth disconnecting" event, which means that almost every state is to handle the event. Meanwhile, the state machine shown in FIG. 1 also needs relatively high code redundancy because a large number of states are checked out due to the same event, and states such as "incoming-call refusal" and "ending calling" are removed due to a "countdown ending" event; there are also a large number of states checked in by the same event, for example, "Bluetooth unconnected" states all appear with a "disconnecting Bluetooth" checking in. However, the same operations are not subjected to a unified processing, so that a large amount of code redundancy exists, and the complexity of the state machine is further increased. The state machine is too complex and redundant, so that the flexibility of the state machine is poor in the state management and adjustment, and meanwhile, the development and maintenance cost of the state machine is also improved.

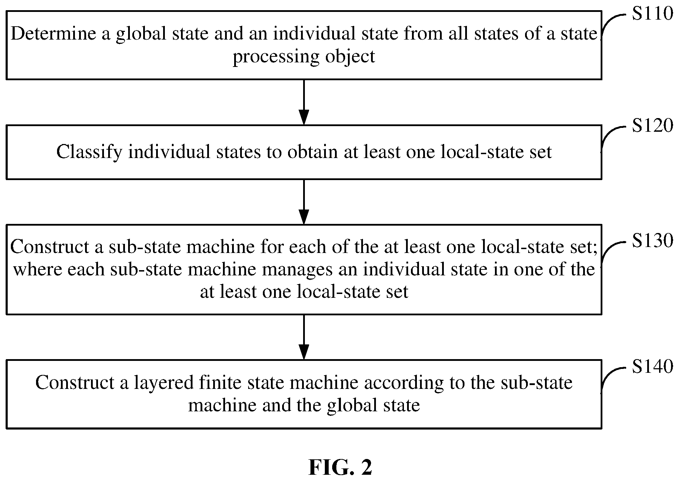

In one example, FIG. 2 is a flowchart of a state machine processing method provided in an embodiment of the present disclosure, this embodiment may be suitable for use in a case where a layered finite state machine is constructed to efficiently manage states, this method may be performed by a state machine processing apparatus, this apparatus may be implemented by way of software and/or hardware, and may be generally integrated in an electronic device. Correspondingly, as shown in FIG. 2, the method includes following operations.

In S 110, a global state and an individual state is determined from all states of a state processing object.

The state processing object may be an object for processing states of a system by using a state machine, may be an electronic device, such as a terminal device with a Bluetooth function, and may also be a virtual system object, such as a business process with an attribute of multi-level state management. As long as an object with multiple types of state transition may be used as the state processing object, a specific type of the state processing object is not limited in the embodiments of the present disclosure. The global state may be a state triggered by a global-influence event, and the global-influence event may be an event that influences all states, such as a Bluetooth disconnecting event in a Bluetooth device, and correspondingly, the global state may be a Bluetooth unconnected state. The individual state may be a state triggered by a non-global-influence event which may be an event that only influences a certain state, and for example, the individual state may be an in-calling state of a Bluetooth phone. The global state and the individual state need to be determined according to the specific type of the state processing object, and specific state types of the global state and the individual state are not limited in the embodiment of the present disclosure.

In an embodiment of the present disclosure, before the state machine is constructed, the type and function of the state processing object may firstly be analyzed to determine two different state types, i.e., the global state and the individual state, from the all states of the state processing object. Because types of state trigger events corresponding to the global state and the individual state are different, all states may be classified according to a state trigger event corresponding to each state, and the global state and the individual state of the state processing object are obtained.

In S120, individual states are classified to obtain at least one local-state set.

The local-state set may be a set including at least one individual state.

Correspondingly, after the all states of the state processing object are classified, individual states of the state processing object may be analyzed and classified according to a correlation between individual states, and each individual state is classified into a corresponding local-state set. Optionally, when the state processing object is the electronic device, each local-state set may include an individual state corresponding to a certain function in the device. When the state processing object is a business process, each local-state set may include an individual state corresponding to a certain link in the business process.

Exemplarily, when the state processing object is a Bluetooth phone, states related to outgoing calls, such as individual states of in-calling, out-calling and dialing cancellation, may be divided into one local-state set, this local-state set may include all states related to outgoing calls. In a similar way, all individual states related to incoming calls may be classified into one local-state set. When the state processing object is the business process, states related to a process start node, such as individual states of starting the device, initializing the configuration, may be divided into one local-state set, this local-state set may include all states related to the process start node.

In S130, a sub-state machine is constructed for each of the at least one local-state set; where each sub-state machine manages an individual state in one of the at least one local-state set.

The sub-state machine may be a state machine that manages all individual states in the local-state set.

After the local-state set is obtained, a corresponding sub-state machine may be respectively constructed for each local-state set. Optionally, each local-state set may correspond to one sub-state machine. That is, each sub-state machine focuses on managing an individual state in a certain local-state set, but cannot manage an individual state in other local-state sets, nor manage the global state.

Exemplarily, when the state processing object is a Bluetooth phone, a local-state set A of the Bluetooth phone may include all individual states related to outgoing calls, and then one sub-state machine A may be constructed for the local-state set A. The sub-state machine A is used for managing all individual states related to the outgoing calls.

In S140, a layered finite state machine is constructed according to the sub-state machine and the global state.

The layered finite state machine may be a state machine constructed by the sub-state machine and the global state.

Correspondingly, after a corresponding sub-state machine is constructed for each local-state set of the state processing object, all global states and all sub-state machines may be combined to form a layered finite state machine. That is, the layered finite state machine may be composed of at least one sub-state machine and at least one global state. In the layered finite state machine, all global states and states of the sub-state machines may be managed uniformly by a top-layer state machine, and optionally, the individual state may be managed by a corresponding sub-state machine.

It should be understood that after a state trigger event involving the non-global-influence event, each state machine in the layered finite state machine may be processed in a normal state processing manner. Exemplarily, the business process as the state processing object is used as an example for illustration, when a message from a sub-task of a particular business that a particular operational phase has been completed is received, an individual state corresponding to a sub-task to be turned to may be acquired through the sub-state machine according to the message that the particular operational phase has been completed. Meanwhile, the state of the sub-state machine is changed according to the acquired individual state corresponding to the sub-task to be turned to. Bluetooth telephone device as the state processing object is used as an example for illustration, after a state trigger event of the non-global-influence event is received, a target individual state corresponding to the state trigger event is determined, a state identifier bit of the target individual state is switched from a closed state to an open state, and it is indicated that the target individual state is a current activate state. Meanwhile, a sub-state machine for managing the target individual state may switch a state identifier bit of the sub-state machine itself from the closed state to the open state, and it is indicated that the sub-state machine is currently in an activate state. For example, if the state trigger event of the global-influence event is received, the state trigger event is responded to by the top-layer state machine on the basis of a current global state, a target sub-state machine with state transition is determined to activate the target sub-state machine, and a subsequent state processing flow is performed by this target sub-state machine.

In addition, it should also be noted that, since the layered finite state machine adopts state processing manners of classifying states and integrating the states into the sub-state machines, each of the sub-state machines may synchronously perform a local processing of the states, and meanwhile, a hierarchical processing of the states may also be synchronously performed between the global state and the individual state. Exemplarily, the Bluetooth telephone device as the state processing object is used as an example for illustration, a current state may be an individual state in a call in an outgoing-call sub-state machine and an individual state in a synchronization address-list in an address-list synchronization sub-state machine at the same time, that is, an individual state of an in-calling and an individual state of synchronizing address-list may be processed in parallel. In a similar way, the current state may be the global state of the Bluetooth connected and the individual state of synchronizing address-list at the same time, that is, the global state of the Bluetooth connected and the individual state of synchronizing address-list may be processed in parallel. Therefore, the states are processed by adopting the layered finite state machine, so that the logic limitation of the state transition may be avoided, and the flexibility in a state processing is improved.

In view of the above, a centralized state management manner of a unified state machine in the related art is broken through by the layered finite state machine in a manner of classifying states and integrating the states into sub-state machines, a hierarchical decoupling processing is performed on the state management function, so that a distributed and targeted management of the states is achieved, the complexity and redundancy of the states and the state machine are reduced, and thus the development and maintenance cost of the state machine is reduced. Since the layered finite state machine may utilize the sub-state machines to manage the individual states, so that the individual states are not influenced by other sub-state machines, namely are not influenced by other unrelated individual states, and thus the flexibility of the state machine in state management and control is improved.

According to the embodiments of the present disclosure, the global states and the individual states are determined from the all states of the state processing object; the individual states are classified to obtain the at least one local-state set; the sub-state machine that may manage an individual state in the local-state set are constructed for each of the at least one local-state set; and the layered finite state machine is constructed according to the sub-state machine and the global state, whereby the states are efficiently managed by using the layered finite state machine, the problems are solved of high complexity of the state machine and the states, high development and maintenance cost of the state machine, the poor flexibility in managing and controlling the state and the like in an existing state management method, so that the complexity of the state machine and the states is reduced, the development and maintenance cost of the state machine is reduced, and the flexibility of the state machine in managing and controlling the states is improved.

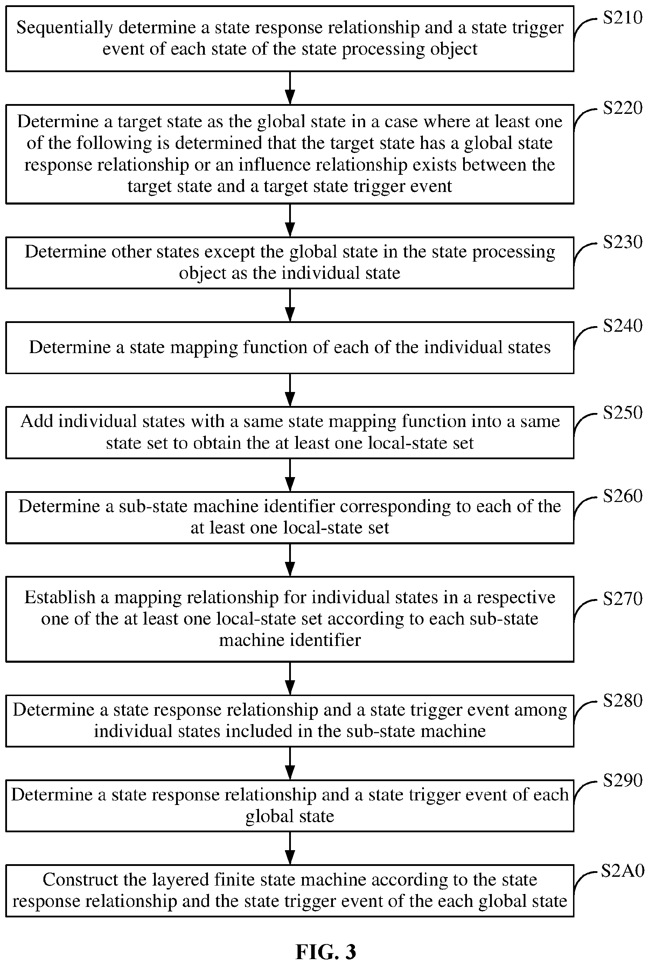

In one example, FIG. 3 is a flowchart of a state machine processing method provided in an embodiment of the present disclosure, and an embodiment of the present disclosure is optimized and improved on the basis of the technical scheme of the above embodiments. Multiple specific optional implementation manners of determining the global state and the individual state, classifying the individual states, constructing the sub-state machine for the each local-state set and constructing the layered finite state machine are provided.

A state machine processing method as shown in FIG. 3 includes the following.

In S210, a state response relationship and a state trigger event of each state of the state processing object are sequentially determined.

The state response relationship may be a response relationship or a switch relationship between states. The state trigger event may be an event that may influence a state switch.

In the embodiments of the present disclosure, the state response relationship and the state trigger event of each state of the state processing object are sequentially determined before distinguishing the global state from the individual states for the state processing object. It should be understood that a corresponding state response relationship exists between the global state and all other individual states.

Exemplarily, as shown in FIG. 1, a Bluetooth phone device is used as an example for illustration. When a Bluetooth phone is currently in an individual state of in-calling, if a Bluetooth disconnecting event is received, then a switch from the individual state of the in-calling to a global state of a Bluetooth unconnected is required. Correspondingly, a state response relationship exists between the individual state of the in-calling and the global state of the Bluetooth unconnected. In a similar way, when the Bluetooth phone is currently in the individual state of the in-calling, if a telephone hanging-up event is received, the individual state of the in-calling needs to be switched to an individual state of an calling ended. Correspondingly, a state response relationship also exists between the individual state of the in-calling and the individual state of the calling ended. It should be understood that each state has a corresponding state trigger event, for example, a state trigger event of the in-calling may be that the call is answered, and a state trigger event of the Bluetooth unconnected is that the Bluetooth is disconnected and the like.

In S220, a target state is determined as the global state in a case where at least one of the following is determined that the target state has a global state response relationship or an influence relationship exists between the target state and a target state trigger event.

The global state response relationship may be a state influence relationship between itself and other states. The target state trigger event may be a type of state trigger event that is capable of determining the global state, such as a global-influence event.

Accordingly, the target state may be determined to be the global state, if it is determined that a state response relationship exists between a certain target state and all other states, that is, it is determined that the target state has the global state response relationship and/or it is determined that an influence relationship exists between the target state and the target state trigger event.

Exemplarily, as shown in FIG. 1, if a state influence relationship exists directly or indirectly between a Bluetooth connected state, a Bluetooth unconnected state, and all other states, i.e., the Bluetooth connected state has a global state influence relationship, the Bluetooth connected state may be determined to be the global state. It should be understood that the Bluetooth disconnecting event may act as the target state trigger event and have the effect of a global-influence. As shown in FIG. 1, there is a Bluetooth-disconnecting influence relationship between the Bluetooth unconnected state and each of other states, and therefore, the Bluetooth unconnected state may be determined to be the global state according to an influence relationship between the Bluetooth disconnecting event and the Bluetooth unconnected state.

In S230, other states except the global state in the state processing object are determined as the individual state.

Correspondingly, after the global state is determined, other states except the global state are determined as the individual state. As shown in the FIG. 1, the global state is determined by two states of Bluetooth connected and Bluetooth unconnected, and states of confirming dialing, out-calling, incoming-call rejection and the like are individual states.

In the above scheme, a state type of the global state may be quickly determined according to the global state response relationship and the target state trigger event, so that the high efficiency of classification of the global state and the individual state is improved.

In S240, a state mapping function of each of the individual states is determined.

The state mapping function may be a function implemented based on the individual state.

In S250, individual states with a same state mapping function are added into a same state set to obtain the at least one local-state set.

For example, individual states may be classified according to a state mapping function of each individual state to obtain a respective local-state set.

Exemplarily, as shown in FIG. 1, for the Bluetooth phone, state mapping functions corresponding to states of confirming dialing, out-calling, in-calling and calling ended are all out-calling functions, so that the individual states of confirming dialing, out-calling, in-calling and calling ended may be added into the state set to obtain a local-state set corresponding to the out-calling function. In a similar way, state mapping functions corresponding to states of incoming-call ringing, in-calling, incoming-call rejection and calling ended are all incoming-call functions, so that individual states of incoming-call ringing, in-calling, incoming-call rejection and calling ended and the like may be added to the state set to obtain another local-state set corresponding to the incoming-call function. In a similar way, state mapping functions corresponding to states of synchronizing address-list, the address-list being empty, the synchronizing address-list being failed and the synchronizing address-list being successful are all address-list synchronization functions, so that individual states of synchronizing address-list, the address-list being empty, the synchronizing address-list being failed and the synchronizing address-list being successful may be added into the state set to obtain another local-state set corresponding to the address-list synchronization function.

In the above technical scheme, the local-state set is classified according to the state mapping functions of the individual states, so that the decoupling of the state management function may be achieved.

In S260, a sub-state machine identifier corresponding to each of the at least one local-state set is determined.

The sub-state machine identifier may be used for uniquely identifying the sub-state machine.

In S270, a mapping relationship is established for individual states in a respective one of the at least one local-state set according to each sub-state machine identifier.

Correspondingly, after each local-state set is acquired, a sub-state machine identifier corresponding to each local-state set is determined according to a number of the local-state sets, and a mapping relationship is established for the individual states in each local-state set according to each sub-state machine identifier so as to construct multiple sub-state machines.

Continuing to illustrate with the above example as an example, the Bluetooth phone may include three local-state sets: a local-state set corresponding to an outgoing-call function, a local-state set corresponding to an incoming-call function, and a local-state set corresponding to an address-list synchronization function. Thus, three sub-state machine identifiers may be set for the Bluetooth phone: an outgoing-call sub-state machine, an incoming-call sub-state machine and an address-list synchronization sub-state machine. Furthermore, a mapping relationship between an outgoing-call sub-state machine identifier and a local-state set corresponding to the outgoing-call function may be established to obtain the outgoing-call sub-state machine, and a mapping relationship between an incoming-call sub-state machine identifier and a local-state set corresponding to the incoming-call function is established to obtain the incoming-call sub-state machine, and a mapping relationship between an address-list synchronization sub-state machine identifier and a local-state set corresponding to the address-list synchronization function is established to obtain the address-list synchronization sub-state machine.

In S280, a state response relationship and a state trigger event among individual states included in the sub-state machine are determined.

In order to perfect the management function of the sub-state machine, after a mapping relationship is established between each local-state set and each sub-state machine identifier, a state trigger event and a state response relationship among individual states included in each sub-state machine may be determined, so that the sub-state machine is constructed.

Exemplarily, continuing to illustrate with the outgoing-call sub-state machine as an example, a state response relationship is set between an individual state of confirming dialing and an individual state in the out-calling, and meanwhile, a state trigger event for switching from the individual state of confirming dialing to the individual state of out-calling is set as a dialing confirmation event; a state response relationship is set between the individual state of the out-calling and an individual state of the in-calling, and meanwhile, a state trigger event of switching from the individual state of the out-calling to the individual state of the in-calling is set as the other side answering event; and a state response relationship is set between the individual state of the in-calling and an individual state of the calling ended, and meanwhile, a state trigger event of switching from the individual state of the in-calling to the individual state of the calling ended is set as a telephone hanging-up event.

According to the above technical schemes, the sub-state machine is constructed by utilizing the classified local-state set, so that the construction efficiency and quality of the sub-state machine are improved, and the problem of logic vulnerability may be avoided.

In S290, a state response relationship and a state trigger event of each global state are determined.

In S2A0, the layered finite state machine is constructed according to the state response relationship and the state trigger event of the each global state.

Considering that a corresponding state response relationship exists between the global state and all states, so that a sub-state machine does not need to be independently configured for the global state, and all global states may be uniformly managed by a top-layer state machine. The top-layer state machine may be a state machine with global management authority in the layered finite state machine, so that a state of each sub-state machine may also be managed. Optionally, a state response relationship and a state trigger event between each global state and each sub-state machine may be determined by the top-layer state machine, so that the global state and each sub-state machine are uniformly managed and controlled. Correspondingly, the top-layer state machine, the global state and each sub-state machine may form a completed layered finite state machine.

Exemplarily, continuing to illustrate with the above Bluetooth phone as an example, the above example analyzes that the global state of the Bluetooth phone may include Bluetooth connected and Bluetooth unconnected. Meanwhile, according to the Bluetooth telephone function, the state of the dialable contact person may be the global state. Thus, a global state of the Bluetooth phone may include: Bluetooth connected, Bluetooth unconnected, and dialable contact person. After the global state of the Bluetooth telephone and each sub-state machine are determined, the state response relationship and the state trigger event of each global state may be determined, respectively, and the layered finite state machine is constructed according to the state response relationship and the state trigger event of each global state. For example, a mutual state response relationship exists between the Bluetooth connected and the outgoing-call sub-state machine, and when a current state is a Bluetooth connected state, if a state trigger event of dialing numbers occurs, then the Bluetooth connected state may be switched to a certain individual state in the outgoing-call sub-state machine (confirming dialing-out-calling-in-calling and the like), when an calling ended state in the outgoing-call sub-state machine is the current state and a countdown ending event occurs, the state may be returned from the calling ended state to be switched to the Bluetooth connected state. In a similar way, state response relationships and corresponding state trigger events may also be respectively determined between other global states, and state response relationships and corresponding state trigger events may also be respectively determined between each global state and each sub-state machine.

It should be noted that when the layered finite state machine is constructed according to the state response relationship and the state trigger event of each global state, processing manners of different state trigger events may be determined for the sub-state machines, respectively. Exemplarily, for a global-influence event, the sub-state machine may set a batch processing mode. The Bluetooth phone is used as an example for illustration, when a Bluetooth disconnecting event occurs, if a previous state is an in-calling state in the outgoing-call sub-state machine, the outgoing-call sub-state machine may be instructed by the top-layer state machine to respond to the Bluetooth disconnecting event. Correspondingly, the outgoing-call sub-state machine may perform a state resetting operation on all individual states managed by the outgoing-call sub-state machine in a unified manner in batches, and in this manner, the state processing manner is simplified. Meanwhile, when the state machine needs to be developed or maintained, all states do not need to be modified, and only the corresponding sub-state machines need to be positioned for local development or maintenance, so that the development and maintenance cost of the state machine is reduced.

In one optional embodiment of the present disclosure, the state machine processing method may include: an updated individual state is determined; a state mapping function of the updated individual state is determined; a sub-state machine to be updated is determined according to the state mapping function of the updated individual state; and a state response relationship and a state trigger event among individual states included in the sub-state machine to be updated are updated.

The updated individual state may be an individual state requiring an update processing, and the sub-state machine to be updated may be a sub-state machine requiring the update processing. Optionally, the update process may include, but is not limited to, processing manners such as adding, deleting, or modifying.

In the embodiments of the present disclosure, when the state processing object has the updated individual state, if an existing in-calling state needs to be updated or a current nonexistent individual state is newly added, a state mapping function of the updated individual state, namely a correlation function corresponding to the updated individual state, may be determined, and then the sub-state machine to be updated is determined according to the state mapping function of the updated individual state, and the state trigger event and the state response relationship among the individual states included in the sub-state machine to be updated are updated.

Exemplarily, continuing to illustrate with the above Bluetooth phone as an example. If it is found that there is no incident response state of a dialing cancellation in a current Bluetooth phone, then the dialing cancellation may be determined as the updated individual state. It should be understood that the dialing cancellation belongs to the outgoing-call function, and therefore, the updated individual state of the dialing cancellation may be added to the outgoing-call sub-state machine, and meanwhile, the outgoing-call sub-state machine is determined as the sub-state machine to be updated to update a state response relationship and a state trigger event between all individual states included in the outgoing-call sub-state machine. In a similar way, if there is a global state needing to be updated, the updated global state may be added into the top-layer state machine, and the state trigger event and the state response relationship among all states included in the top-layer state machine are updated.

In the above technical schemes, the sub-state machine is updated, management and control functions of the sub-state machines may be continuously improved according to actual requirements, so that the state management and control capability of the layered finite state machine is improved.

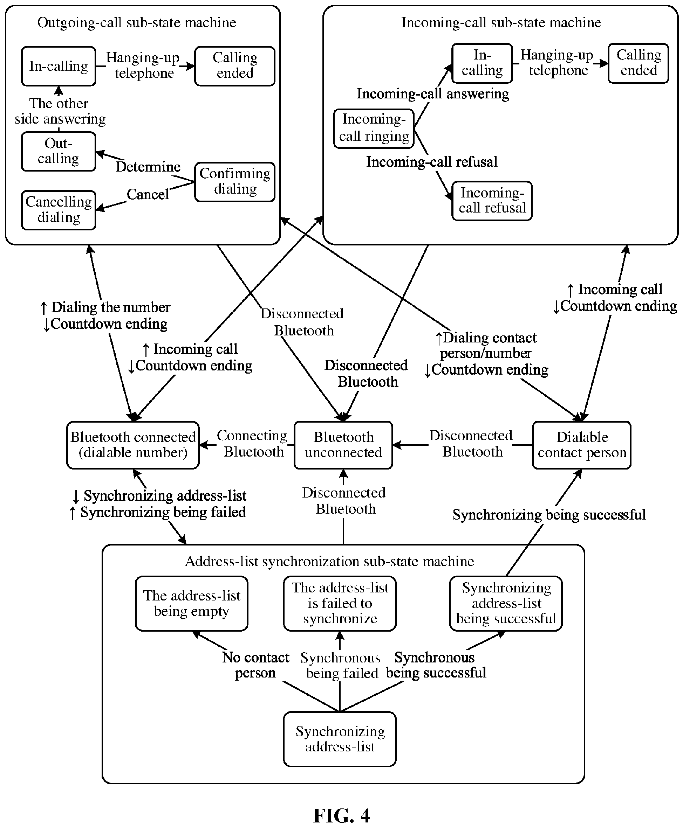

FIG. 4 is a schematic structural diagram of a layered finite state machine of a Bluetooth telephone device provided in an embodiment of the present disclosure. In an optional embodiment of the present disclosure, as shown in FIG. 4, the state processing object may include a Bluetooth phone device, such as a vehicle-mounted Bluetooth phone device in the Internet of Vehicles technology; the global state may include Bluetooth connected, Bluetooth being unconnected, and a dialable contact person; the sub-state machines may include an outgoing-call sub-state machine, an incoming-call sub-state machine, and an address-list synchronization sub-state machine.

As shown in FIG. 4, the outgoing-call sub-state machine may manage all individual states related to an outgoing-call function of the Bluetooth telephone device, the incoming-call sub-state machine may manage all individual states related to an incoming-call function of the Bluetooth telephone device, and the address-list synchronization sub-state machine may manage all individual states related to an address-list synchronization function of the Bluetooth telephone device. A corresponding connection relationship may be established between each sub-state machine and the global state according to a specific state trigger event, so that the sub-state machines and the global states jointly form the layered finite state machine.

This arrangement has advantages that the states are classified by adding the sub-state machines, a number of states in a same sub-state machine may be reduced, and meanwhile state changes between different sub-state machines are normalized. If a Bluetooth connection disconnection event is triggered when it is currently in an individual state of an confirming dialing in the outgoing-call sub-sate machine, the individual state of the confirming dialing in the outgoing-call sub-sate machine does not need to be notified to perform a reset operation, and all individual states may be immediately subjected to a batch reset processing by the outgoing-call sub-state machine at an outer layer, so that the complexity of the state management is reduced. Meanwhile, all states in the sub-state machine are processed uniformly, and conventional events (such as "disconnecting Bluetooth") to be processed are processed uniformly, so that logics requiring a large amount of repeated operations are unified, the redundant code amount of the state machine may be reduced, and the complexity of all states in the sub-state machine may be reduced.

According to the above technical schemes, states are classified by utilizing a state response relationship and a state trigger event of the states, a global state and an individual state are determined, individual states are classified to obtain at least one local-state set, and the sub-state machine that may manage an individual state in the local-state set are constructed for each of the at least one local-state set; and the layered finite state machine is constructed according to the sub-state machine and the global state, thereby the states are efficiently managed by using the layered finite state machine, the problems of high complexity of the state machine and the states, high development and maintenance cost of the state machine, poor flexibility in managing and controlling the state and the like in an existing state management method are solved, so that the complexity of the state machine and the states is reduced, the development and maintenance cost of the state machine is reduced, and the flexibility of the state machine in managing and controlling the state is improved.

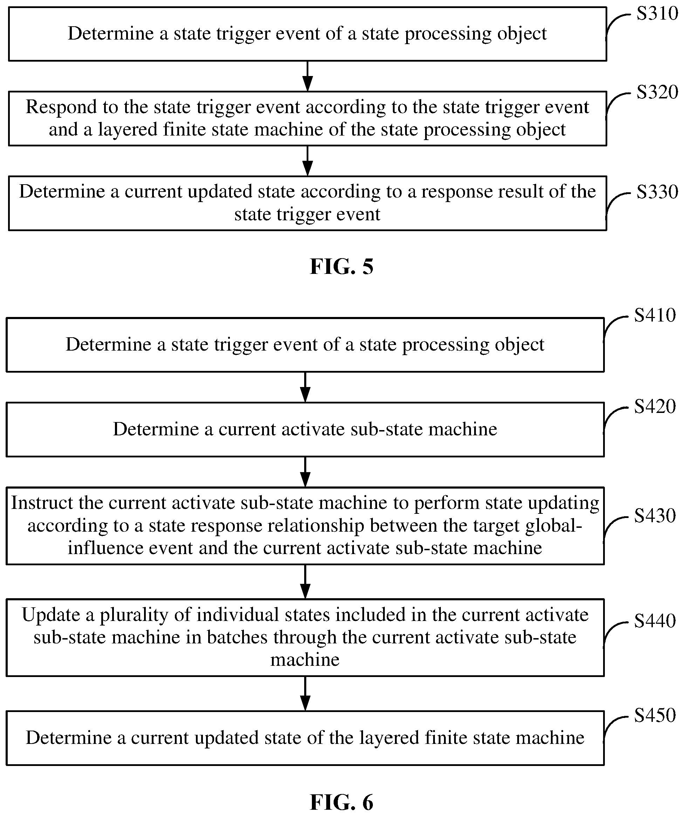

In one example, FIG. 5 is a flowchart of a state processing method provided in an embodiment of the present disclosure, this embodiment may be suitable for use in a case where a layered finite state machine is used for efficiently managing states, the method may be performed by a state processing apparatus, the apparatus is implemented in software and/or hardware, and may be generally integrated in an electronic device. Correspondingly, as shown in FIG. 5, the method includes following operations.

In S310, a state trigger event of a state processing object is determined.

It should be understood that the state processing object causes a switching processing of an internal state only when receiving the state trigger event. Therefore, when the state processing object processes a state by using the layered finite state machine, the state trigger event needs to be determined firstly.

In S320, the state trigger event is responded to according to the state trigger event and a layered finite state machine of the state processing object.

The layered finite state machine is constructed by the state machine processing method in any one of the embodiments described above.

In S330, a current updated state is determined according to a response result of the state trigger event.

The current updated state may be an updated state determined by the layered finite state machine according to a response result of the state trigger event, may be a global state, or may be an individual state, which is not limited in the embodiments of the present disclosure.

Correspondingly, after the state trigger event is determined, the layered finite state machine of the state processing object may be used for responding to the state trigger event according to a type of the state trigger event, and thus a current updated state is determined according to the response result.

Exemplarily, the business process as the state processing object is used as an example for illustration, when a message from a sub-task of a particular business that a particular operational phase has been completed is received, an individual state corresponding to a sub-task to be turned to may be acquired through the sub-state machine according to the message that the particular operational phase has been completed. Meanwhile, the state of the sub-state machine is changed according to the acquired individual state corresponding to the sub-task to be turned to. Bluetooth telephone device as the state processing object is used as an example for illustration, after a state trigger event of the non-global-influence event is received and it is determined that the state trigger event is successfully responded, a target individual state corresponding to the state trigger event is determined, a state identifier bit of the target individual state is switched from a closed state to an open state, and it is indicated that the target individual state is a current activate state. Meanwhile, a sub-state machine for managing the target individual state may switch a state identifier bit of the sub-state machine itself from the closed state to the open state, and it is indicated that the sub-state machine is currently in an activate state. For example, if the state trigger event of the global-influence event is received, the state trigger event is responded to by the top-layer state machine on the basis of a current global state, a target sub-state machine with state transition is determined to activate the target sub-state machine, and a subsequent state processing flow is performed by this target sub-state machine.

According to the embodiments of the present disclosure, the global state and the individual state are determined from the all states of the state processing object; the individual states are classified to obtain the at least one local-state set; the sub-state machine that may manage an individual state in the local-state set are constructed for each of the at least one local-state set; and thus the layered finite state machine is constructed according to the sub-state machine and the global state. After the layered finite state machine is constructed, when the state trigger event of the state processing object is determined, the state trigger event may be responded according to the state trigger event and the layered finite state machine of the state processing object, and the current updated state is determined according to the response result of the state trigger event. The problems of high complexity of the state machine and the states, high development and maintenance cost of the state machine, the poor flexibility in managing and controlling the states and the like in an existing state management method are solved, so that the complexity of the state machine and the states is reduced, the development and maintenance cost of the state machine is reduced, and the flexibility of the state machine in managing and controlling the state is improved.

In one example, FIG. 6 is a flowchart of a state machine processing method provided in an embodiment of the present disclosure, and an embodiment of the present disclosure is optimized and improved on the basis of the technical scheme of the above embodiments. Multiple optional implementation manners of responding to the state trigger event according to the state trigger event and the layered finite state machine of the state processing object are provided.

A state processing method as shown in FIG. 6 includes the following.

In S410, a state trigger event of a state processing object is determined.

The state trigger event includes a target global-influence event. The target global-influence event may be a global-influence event capable of instructing the sub-state machine to perform updating in batches on individual states included in the sub-state machine.

In S420, a current activate sub-state machine is determined.

The current activate sub-state machine may be a sub-state machine currently in an activate state.

In S430, the current activate sub-state machine is instructed to perform state updating according to a state response relationship between the target global-influence event and the current activate sub-state machine.

Since the target global-influence event may instruct the sub-state machine to perform updating in batches on individual states included in the sub-state machine, after the type of the state trigger event is determined to be the target global-influence event, the state response relationship between the target global-influence event and the current activate sub-state machine may be determined, and the current activate sub-state machine is instructed to perform the state updating according to the state response relationship. Optionally, the current activate sub-state machine is instructed to perform the state updating through a top-layer state machine in the layered finite state machine according to the state response relationship.

In S440, a plurality of individual states included in the current activate sub-state machine are updated in batches through the current activate sub-state machine.

Correspondingly, after the current activate sub-state machine receives an indication message of the state updating, all individual states included in the current activate sub-state machine may be updated in batches.

A Bluetooth phone is used as an example, when a target global-influence event which occurs is a Bluetooth disconnecting event, if the current activate sub-state machine is an outgoing-call sub-state machine, and a current activate individual state in the outgoing-call sub-state machine is an in-calling state, the outgoing-call sub-state machine may be instructed by the top-layer state machine to respond to the Bluetooth disconnecting event. Correspondingly, the outgoing-call sub-state machine may uniformly perform a state resetting operation on all individual states managed by the outgoing-call sub-state machine in batches, for example, state identifier bits of the all individual states are controlled to be switched to a closed state in batches, so that the state processing manner is simplified, and thus the state processing efficiency and accuracy are improved.

In S450, a current updated state of the layered finite state machine is determined.

According to the above technical scheme, the target global-influence event is responded to according to the target global-influence event and the layered finite state machine of the state processing object, so that the individual states are updated in batches through the sub-state machine, a state processing manner is simplified, and thus the state processing efficiency and accuracy are improved.

It should be noted that any substitution and combination of the technical features in the above embodiments also fall within the protection scope of the present disclosure.

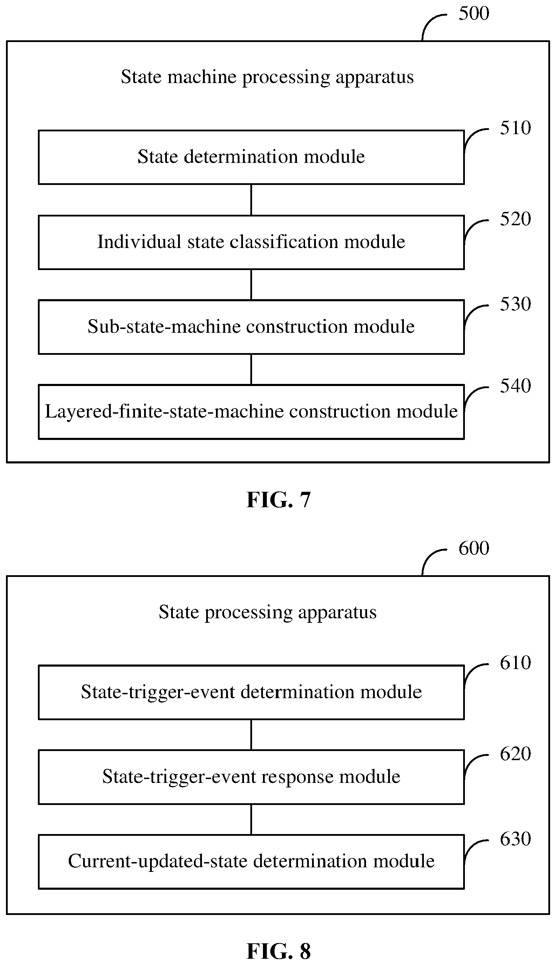

In one example, FIG. 7 is a structural diagram of a state machine processing apparatus provided in an embodiment of the present disclosure, the embodiment of the present disclosure may be suitable for use in a case where a layered finite state machine is constructed to efficiently manage states, the apparatus is implemented by software and/or hardware, and is configured in an electronic device.

As shown in FIG. 7, a state machine processing apparatus 500 includes a state determination module 510, an individual state classification module 520, a sub-state-machine construction module 530, and a layered-finite-state-machine construction module 540.

The state determination module 510 is configured to determine a global state and an individual state from all states of a state processing object.

The individual state classification module 520 is configured to classify individual states to obtain at least one local-state set.

The sub-state-machine construction module 530 is configured to construct a sub-state machine for each of the at least one local-state set; where each sub-state machine manages an individual state in one of the at least one local-state set.

The layered-finite-state-machine construction module 540 is configured to construct a layered finite state machine according to the sub-state machine and the global state.

According to the embodiments of the present disclosure, the global state and the individual state are determined from the all states of the state processing object; the individual states are classified to obtain the at least one local-state set; the sub-state machine that may manage an individual state in the local-state set are constructed for each of the at least one local-state set; and the layered finite state machine is constructed according to the sub-state machine and the global state, thereby the states are efficiently managed by using the layered finite state machine, the problems of high complexity of the state machine and the states, high development and maintenance cost of the state machine, the poor flexibility in managing and controlling the state and the like in an existing state management method are solved, so that the complexity of the state machine and the states is reduced, the development and maintenance cost of the state machine is reduced, and the flexibility of the state machine in managing and controlling the state is improved.

Optionally, the state determination module 510 is configured to: sequentially determine a state response relationship and a state trigger event of each state of the state processing object; determine a target state as the global state in a case where it is determined that the target state has a global state response relationship and/or an influence relationship exists between the target state and a target state trigger event; and determine other states except the global state in the state processing object as the individual state.

Optionally, the individual state classification module 520 is configured to: determine a state mapping function of each of the individual states; and add individual states with a same state mapping function into a same state set to obtain the at least one local-state set.

Optionally, the sub-state machine building module 530 is configured to: determine a sub-state machine identifier corresponding to each of the at least one local-state set; establish a mapping relationship for individual states in a respective one of the at least one local-state set according to each sub-state machine identifier; and determine a state response relationship and a state trigger event among individual states included in the sub-state machine.

Optionally, the layered-finite-state-machine construction module 540 is configured to: determine a state response relationship and a state trigger event of each global state; and construct the layered finite state machine according to the state response relationship and the state trigger event of the each global state.

Optionally, the state machine processing apparatus includes: an updated-individual-state determination module, a state-mapping-function determination module, a module for determining a sub-state machine to be updated, and a relationship event update module. The updated-individual-state determination module is configured to determine an updated individual state. The state-mapping-function determination module is configured to determine the state mapping function of the updated individual state. The module for determining a sub-state machine to be updated is configured to determine a sub-state machine to be updated according to the state mapping function of the updated individual state. The relationship event update module is configured to update a state response relationship and a state trigger event among individual states included in the sub-state machine to be updated.

Optionally, the state processing object includes a Bluetooth phone device; the global state includes Bluetooth connected, Bluetooth unconnected and a dialable contact person; and the sub-state machine includes an outgoing-call sub-state machine, an incoming-call sub-state machine and an address-list synchronization sub-state machine.

The state machine processing apparatus described above may execute the state machine processing method provided in any of the embodiments of the present disclosure, and has function modules and beneficial effects corresponding to the method performed. Technical details not described in detail in this embodiment may be referred to as the state machine processing method provided in any of the embodiments of the present disclosure.

Since the state machine processing apparatus introduced above is an apparatus capable of performing the state machine processing method in the embodiments of the present disclosure, the specific implementation manner of the state machine processing apparatus of the present embodiment and various variations thereof will be learned by those skilled in the art based on the state machine processing method introduced in the embodiments of the present disclosure, so how the state machine processing apparatus implements the state machine processing method in the embodiments of the present disclosure will not be described in detail herein. As long as an apparatus adopted by those skilled in the art to implement the state machine processing method in the embodiments of the present disclosure belongs to the scope of protection of the present disclosure.

In one example, FIG. 8 is a structural diagram of a state machine processing apparatus provided in an embodiment of the present disclosure, the embodiment of the present disclosure may be suitable for use in a case where a layered finite state machine is used for efficiently managing states, the apparatus is implemented by software and/or hardware, and is configured in an electronic device.

As shown in FIG. 8, a state processing apparatus 600 includes a state-trigger-event determination module 610, a state-trigger-event response module 620, and a current-updated-state determination module.

The state-trigger-event determination module 610 is configured to determine a state trigger event of a state processing object.

The state-trigger-event response module 620 is configured to respond to the state trigger event according to the state trigger event and a layered finite state machine of the state processing object; where the layered finite state machine is constructed by the state machine processing method of any one of the embodiments described above.

The current-updated-state determination module 630 is configured to determine a current updated state according to a response result of the state trigger event.

According to the embodiments of the present disclosure, the global state and the individual state are determined from the all states of the state processing object; the individual states are classified to obtain the at least one local-state set; the sub-state machine that may manage an individual state in the local-state set are constructed for each of the at least one local-state set; and thus the layered finite state machine is constructed according to the sub-state machine and the global state. After the layered finite state machine is constructed, when the state trigger event of the state processing object is determined, the state trigger event may be responded according to the state trigger event and the layered finite state machine of the state processing object, and the current updated state is determined according to the response result of the state trigger event. The problems of high complexity of the state machine and the states, high development and maintenance cost of the state machine, the poor flexibility in managing and controlling the state and the like in an existing state management method are solved, so that the complexity of the state machine and the states is reduced, the development and maintenance cost of the state machine is reduced, and the flexibility of the state machine in managing and controlling the state is improved.

Optionally, the state trigger event includes a target global-influence event. The state-trigger-event response module 620 is configured to: determine a current activate sub-state machine; instruct the current activate sub-state machine to perform state updating according to the target global-influence event and a state response relationship of the current activate sub-state machine; and update a plurality of individual states included in the current activate sub-state machine in batches through the current activate sub-state machine.

The state processing apparatus described above may execute the state processing method provided in any of the embodiments of the present disclosure, and has function modules and beneficial effects corresponding to the method performed. Technical details not described in detail in this embodiment may be referred to as the state processing method provided in any of the embodiments of the present disclosure.

Since the state processing apparatus introduced above is an apparatus capable of performing the state processing method in the embodiments of the present disclosure, the specific implementation manner of the state processing apparatus of the present embodiment and various variations thereof will be learned by those skilled in the art based on the state processing method introduced in the embodiments of the present disclosure, so how the state processing apparatus implements the state processing method in the embodiments of the present disclosure will not be described in detail herein. As long as an apparatus adopted by those skilled in the art to implement the state processing method in the embodiments of the present disclosure belongs to the scope of protection of the present disclosure.

In one example, the present disclosure further provides an electronic device, a readable storage medium and a computer program product.

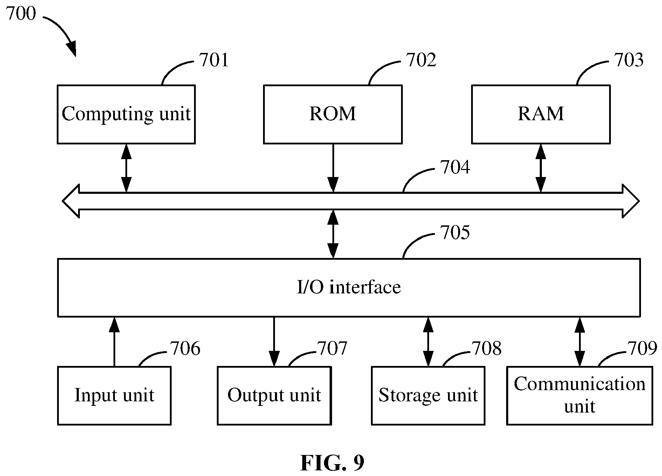

FIG. 9 shows a schematic block diagram of an exemplary electronic device 700 that may be used for implementing the embodiments of the present disclosure. The electronic device is intended to represent various forms of digital computers, such as laptops, desktops, workstations, personal digital assistants, servers, blade servers, mainframe computers, and other appropriate computers. The electronic device may also represent various forms of mobile devices, such as personal digital processing, cellphones, smartphones, wearable devices, and other similar computing devices. The components shown herein, their connections and relationships between these components, and the functions of these components, are illustrative only and are not intended to limit implementations of the present disclosure described and/or claimed herein.

As shown in FIG. 9, the device 700 includes a computing unit 701, the computing unit 701 may perform various appropriate actions and processes according to a computer program stored in a read-only memory (ROM) 702 or a computer program loaded from a storage unit 708 into a random-access memory (RAM) 703. The RAM 703 may also store various programs and data required for the operation of the device 700. The computing unit 701, the ROM 702, and the RAM 703 are connected via a bus 704. An input/output (I/O) interface 705 is also connected to the bus 704.

Multiple components in the device 700 are connected to the I/O interface 705, and the multiple components include an input unit 706 such as a keyboard or a mouse, an output unit 707 such as various types of displays or speakers, the storage unit 708 such as a magnetic disk or an optical disk, and a communication unit 709 such as a network card, a modem or a wireless communication transceiver. The communication unit 709 allows the device 700 to exchange information/data with other devices over a computer network such as the Internet and/or various telecommunication networks.

The computing unit 701 may be a variety of general-purpose and/or dedicated processing assemblies having processing and calculating capabilities. Some examples of the computing unit 701 include, but are not limited to, a central processing unit (CPU), a graphics processing unit (GPU), a special-purpose artificial intelligence (AI) computing chip, a computing unit executing machine learning model algorithms, a digital signal processor (DSP) and any suitable processor, controller and microcontroller. The computing unit 701 performs the various methods and processes described above, such as a state machine processing method or a state processing method. For example, in some embodiments, the state machine processing method or the state processing method may be implemented as computer software programs tangibly embodied in a machine-readable medium, such as the storage unit 708. In some embodiments, part or all of computer programs may be loaded and/or installed on the device 700 via the ROM 702 and/or the communication unit 709. When the computer program is loaded to the RAM 703 and executed by the computing unit 701, one or more steps of the state machine processing method or the state processing method described above may be executed. Alternatively, in other embodiments, the computing unit 701 may be configured, in any other suitable manners (e.g., by means of firmware), to perform the state machine processing method or the state processing method.

Various implementations of the systems and technologies described above herein may be achieved in digital electronic circuit systems, integrated circuit systems, field-programmable gate arrays (FPGAs), application-specific integrated circuits (ASICs), application-specific standard products (ASSPs), systems on chip (SOCs), complex programmable logic devices (CPLDs), computer hardware, firmware, software, and/or combinations thereof. These various implementations may include implementation in one or more computer programs, and the one or more computer programs are executable and/or interpretable on a programmable system including at least one programmable processor, the programmable processor may be a special-purpose or general-purpose programmable processor for receiving data and instructions from a memory system, at least one input device and at least one output device and transmitting data and instructions to the memory system, the at least one input device and the at least one output device.

Program codes for implementing the methods of the present disclosure may be written in any combination of one or more programming languages. These program codes may be provided for the processor or controller of a general-purpose computer, a special-purpose computer, or another programmable data processing device to enable the functions/operations specified in a flowchart and/or a block diagram to be implemented when the program codes are executed by the processor or controller. The program codes may be executed entirely on a machine, partly on the machine, as a stand-alone software package, partly on the machine and partly on a remote machine, or entirely on the remote machine or server.

In the context of the present disclosure, a machine-readable medium may be a tangible medium that may contain or store a program available for an instruction execution system, apparatus or device or a program used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any appropriate combination of the foregoing. More specific examples of the machine-readable storage medium may include an electrical connection based on one or more wires, a portable computer diskette, a hard disk, a random access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination of the foregoing.

To provide the interaction with a user, the systems and technologies described here may be implemented on a computer. The computer has a display device (e.g., a cathode-ray tube (CRT) or liquid-crystal display (LCD) monitor) for displaying information to the user; and a keyboard and a pointing device (e.g., a mouse or a trackball) through which the user may provide input to the computer. Other kinds of devices may also be used for providing for interaction with the user; for example, feedback provided to the user may be sensory feedback in any form (such as, visual feedback, auditory feedback, or haptic feedback); and input from the user may be received in any form (including acoustic input, speech input, or haptic input).

The systems and technologies described here may be implemented in a computing system including a back-end component (e.g., a data server), or a computing system including a middleware component (such as, an application server), or a computing system including a front-end component (e.g., a client computer having a graphical user interface or a web browser through which the user may interact with the implementations of the systems and technologies described herein), or a computing system including any combination of such back-end component, middleware component, or front-end component. The components of the system may be interconnected by any form or medium of digital data communication (for example, a communication network). Examples of the communication network include a local area network (LAN), a wide area network (WAN), a blockchain network and the Internet.

The computing system may include clients and servers. A client and a server are generally remote from each other and typically interact through the communication network. A relationship between the clients and the servers arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a traditional physical host and a related virtual private server (VPS) service.

According to the embodiments of the present disclosure, the global state and the individual state are determined from the all states of the state processing object; the individual states are classified to obtain the at least one local-state set; the sub-state machine that may manage an individual state in the local-state set are constructed for each of the at least one local-state set; and thus a layered finite state machine is constructed according to the sub-state machine and the global state. After the layered finite state machine is constructed, when the state trigger event of the state processing object is determined, the state trigger event may be responded according to the state trigger event and the layered finite state machine of the state processing object, and the current updated state is determined according to the response result of the state trigger event. The problems of high complexity of the state machine and the states, high development and maintenance cost of the state machine, the poor flexibility in managing and controlling the state and the like in an existing state management method are solved, so that the complexity of the state machine and the states is reduced, the development and maintenance cost of the state machine is reduced, and the flexibility of the state machine in managing and controlling the state is improved.

It should be understood that various forms of the flows shown above, reordering, adding or deleting steps may be used. For example, the steps described in the present disclosure may be executed in parallel, sequentially or in different orders as long as the desired result of the technical scheme provided in the present disclosure may be achieved. The execution sequence of these steps is not limited herein.

The above implementations should not be construed as limiting the protection scope of the present disclosure. It should be understood by those skilled in the art that various modifications, combinations, sub-combinations and substitutions may be made, depending on design requirements and other factors. Any modification, equivalent replacement, and improvement made within the spirit and principle of the present disclosure should be included within the protection scope of the present disclosure.

## Claims

1. A state machine processing method, comprising:
determining (S110) a global state and an individual state from all states of a state processing object;
classifying (S120) individual states to obtain at least one local-state set;
constructing (S130) a sub-state machine for each of the at least one local-state set, wherein each sub-state machine manages an individual state in one of the at least one local-state set; and
constructing (S140) a layered finite state machine according to the sub-state machines and the global state.

2. The method of claim 1, wherein determining (S110) the global state and the individual state from the all states of the state processing object comprises:
sequentially (S210) determining a state response relationship and a state trigger event of each state of the state processing object;
determining (S220) a target state as the global state in a case where at least one of the following is determined that the target state has a global state response relationship or an influence relationship exists between the target state and a target state trigger event; and
determining (S230) other states except the global state in the state processing object as the individual state.

3. The method of claim 1 or 2, wherein classifying (S120) the individual states to obtain the at least one local-state set comprises:
determining (S240) a state mapping function of each of the individual states; and
adding (S250) individual states with a same state mapping function into a same state set to obtain the at least one local-state set.

4. The method of any one of claims 1 to 3, wherein constructing (S 130) the sub-state machine for each of the at least one local-state set comprises:
determining (S260) a sub-state machine identifier corresponding to each of the at least one local-state set;
establishing (S270) a mapping relationship for individual states in a respective one of the at least one local-state set according to each sub-state machine identifier; and
determining (S280) a state response relationship and a state trigger event among individual states comprised in the sub-state machines.

5. The method of any one of claims 1 to 4, wherein constructing (S140) the layered finite state machine according to the sub-state machines and the global state comprises:
determining (S290) a state response relationship and a state trigger event of each global state; and
constructing (S2A0) the layered finite state machine according to the state response relationship and the state trigger event of the each global state.

6. The method of any one of claims 1 to 5, further comprising:
determining an updated individual state;
determining a state mapping function of the updated individual state;
determining a sub-state machine to be updated according to the state mapping function of the updated individual state; and
updating a state response relationship and a state trigger event among individual states comprised in the sub-state machine to be updated.

7. The method of any one of claims 1 to 6, wherein the state processing object comprises a Bluetooth phone device;
the global state comprises Bluetooth connected, Bluetooth being unconnected and a dialable contact person; and
each of the sub-state machines comprises an outgoing-call sub-state machine, an incoming-call sub-state machine and an address-list synchronization sub-state machine.

8. A state processing method, comprising:
determining (S310, S410) a state trigger event of a state processing object;
responding (S320) to the state trigger event according to the state trigger event and a layered finite state machine of the state processing object, wherein the layered finite state machine is constructed by the state machine processing method of any one of claims 1 to 7; and
determining (S330) a current updated state according to a response result of the state trigger event.

9. The method of claim 8, wherein the state trigger event comprises a target global-influence event;
responding (S320) to the state trigger event according to the state trigger event and the layered finite state machine of the state processing object comprises:
determining (S420) a current activate sub-state machine;
instructing (S430) the current activate sub-state machine to perform state updating according to the target global influence event and a state response relationship of the current activate sub-state machine; and
updating (S440) a plurality of individual states comprised in the current activate sub-state machine in batches through the current activate sub-state machine.

10. A state machine processing apparatus, comprising:
a state determination module (510) configured to determine a global state and an individual state from all states of a state processing object;
an individual state classification module (520), which is configured to classify individual states to obtain at least one local-state set;
a sub-state-machine construction module (530), which is configured to construct a sub-state machine for each of the at least one local-state set, wherein each sub-state machine manages an individual state in one of the at least one local-state set; and
a layered-finite-state-machine construction module (540), which is configured to construct a layered finite state machine according to the sub-state machines and the global state.

11. The apparatus of claim 10, wherein the state determination module (510) is configured to:
sequentially determine a state response relationship and a state trigger event of each state of the state processing object;
determine a target state as the global state in a case where at least one of the following is determined that the target state has a global state response relationship or an influence relationship exists between the target state and a target state trigger event; and
determine other states except the global state in the state processing object as the individual state.

12. A state processing apparatus, comprising:
a state-trigger-event determination module (610), which is configured to determine a state trigger event of a state processing object;
a state-trigger-event response module (620), which is configured to respond to the state trigger event according to the state trigger event and a layered finite state machine of the state processing object, wherein the layered finite state machine is constructed by the state machine processing method of any one of claims 1 to 7; and
a current-updated-state determination module (630), which is configure to determine a current updated state according to a response result of the state trigger event.

13. An electronic device, comprising:
at least one processor; and
a memory communicatively connected to the at least one processor;
wherein the memory stores an instruction executable by the at least one processor, and the instruction, when executed by the at least one processor, causes the at least one processor to perform the state machine processing method of any one of claims 1 to 7 or perform the state processing method of any one of claims 8 to 9.

14. A non-transitory computer readable storage medium storing a computer instruction, wherein the computer instruction is configured to cause a computer to perform the state machine processing method of any one of claims 1 to 7 or perform the state processing method of any one of claims 8 to 9.

15. A computer program, wherein the computer program, when executed by a processor, implements the state machine processing method of any one of claims 1 to 7 or performs the state processing method of any one of claims 8 to 9.
